# EUROPÄISCHE PATENTANMELDUNG

(11) **EP 1 411 667 A1**
(43) Veröffentlichungstag der Anmeldung: **21.04.2004**
(21) Anmeldenummer: 02023156.9
(22) Anmeldetag: 15.10.2002
(51) Int. Cl.: H04L 1/18

(54) **Verfahren zur gesicherten Datenübertragung**

(71) Anmelder: SIEMENS AKTIENGESELLSCHAFT, 80333 München (DE)
(72) Erfinder: Giebel, Tobias, 21075 Hamburg (DE); Lampe, Matthias, 21073 Hamburg (DE); Rohling, Hermann, Prof., 38304 Wolfenbüttel (DE); Zirwas, Wolfgang, 82194 Gröbenzell (DE)

(57) **Zusammenfassung**

Die Erfindung betrifft ein Verfahren zur Datenübertragung in einem digitalen Kommunikationssystem, wobei ein erstes Datenpaket von einem Sender zu einem Empfänger übermittelt und im Empfänger ausgewertet wird und eines oder mehrere weitere Datenpakete gleichen Inhalts und gleicher Länge wie das erste Datenpaket zu mindestens einem späteren Zeitpunkt von dem Sender zu dem Empfänger übermittelt wird. Erfindungsgemäß wird im Empfänger mindestens eine Kombination von mindestens zwei aus den zu verschiedenen Zeitpunkten gesendeten Datenpaketen gebildet und ausgewertet.

Ein Vorteil des Verfahrens liegt darin, dass empfängerseitig die z.B. mittels ARQ angeforderten Wiederholungspakete gemeinsam mit den aus vorangegangenen Übertragungen vorliegenden Paketen ausgewertet werden können, und durch die Kombination von Paketen eine zuverlässigere Detektion ermöglicht wird.

## Beschreibung

Die Erfindung betrifft ein Verfahren zur Datenübertragung in einem digitalen Kommunikationssystem nach dem Oberbegriff des Anspruchs 1.

Ferner betrifft die Erfindung eine Empfangseinrichtung für ein digitales Kommunikationssystem nach dem Oberbegriff des Anspruchs 13.

Ein wie auch immer geartetes digitales Kommunikationssystem zerfällt in der Regel in ein Anwendungssystem und ein Transportsystem. Das Transportsystem stellt dabei einen sicheren, d.h. fehlerfreien und qualitativ hochwertigen, Transportweg zwischen Stationen zur Verfügung. Das Anwendungssystem setzt diesen Transport voraus und interpretiert die transportierten Daten (Sprache, Bilder, Daten, etc.) auf eine bestimmte Art und Weise, um sie dem Teilnehmer entsprechend nutzbar zu machen.

In digitalen Funk-Kommunikationssystemen werden Informationen (beispielsweise Sprache, Bildinformation, Videoinformation, SMS [Short Message Service] oder andere Daten) mit Hilfe von elektromagnetischen Wellen über eine Luftschnittstelle zwischen sendender und empfangender Station (beispielsweise Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für das eingeführte GSM-Mobilfunksystem (Global System for Mobile Communication) werden beispielsweise Frequenzen bei 850, 900, 1800 und 1900 MHz genutzt.

Nachrichtenkanäle, insbesondere Funkkanäle, sind einer Vielzahl von Störungen ausgesetzt. Unvermeidbar bei allen Systemen ist die Störung durch das Rauschen der Empfänger. Dies ist meist additives weißes Gaußsches Rauschen. Die Bewertung und Auslegung von Übertragungsverfahren erfolgt häufig lediglich aufgrund dieser Störeinflüsse, d.h. das System wird am klassischen Kanal mit Gaußschem weißem Rauschen analysiert. Tatsächlich aber zeigen z.B. Mobilfunkkanäle viele zusätzliche Störungen, hervorgerufen durch Mehrwegeempfang, Streuung, Fading, Totalausfälle, Impulsstörungen, Interferenz von anderen Teilnehmern und Störsignalen.

Eine weitestgehend fehlerfreie Datenübertragung wird bei modernen digitalen Kommunikationssystemen unter anderem durch sogenannte ARQ (Automatic Repeat Request) Mechanismen gewährleistet. Hierbei handelt es sich um Verfahren zur gesicherten Datenübertragung, bei dem der Empfänger die gesendeten Daten auswertet und Fehler erkennt, um dann um Übertragungswiederholungen nachzusuchen. Im Fehlerfall oder bei Nichteintreffen der Datenpakete kann eine automatische Wiederholung der Sendung ausgelöst werden. Der Sender übermittelt also ein erstes Datenpaket zum Empfänger. Gegebenenfalls werden dann eines oder mehrere weitere Datenpakete zur Wiederholung an den Empfänger übermittelt. Die Wiederholung wird nicht nur beim totalen Ausbleiben von Datenpaketen gefordert, sondern auch, wenn Datenpakete durch Störungen bei der Übertragung verstümmelt worden sind oder fehlerbehaftet sind. Der Sender wiederholt die Übermittlung, sendet also Wiederholungspakete, bis der korrekte Erhalt des Paketes bestätigt wird oder andere Abbruchkriterien wie z.B. das Ablaufen eines Zeitlimits erfüllt sind.

Gängige Praxis ist es, als fehlerbehaftet erkannte Pakete komplett zu verwerfen und somit die Auswertung der angeforderten Wiederholungen unabhängig vom ursprünglich empfangenen, d.h. ersten, Datenpaket durchzuführen. Der Informationsgehalt der fehlerbehafteten Pakete geht also vollständig verloren. Die Wiederholungspakete haben dann den gleichen Inhalt wie das ursprünglich gesendete Paket. Ihre Länge entspricht in diesem Fall derjenigen des ursprünglichen Datenpaketes.

Weiterhin existieren unter der Bezeichnung Incremental Redundancy hybride Lösungen aus ARQ und FEC (Forward Error Correction), bei denen im Fehlerfall statt der Wiederholung des kompletten Paketes nur jeweils zusätzliche Redundanz übertragen wird, die zusammen mit dem ursprünglich gesendeten Paket eine bessere Fehlerkorrektur ermöglicht. Bei Bedarf kann in mehreren abgestuften Schritten Redundanz hinzugefügt werden. Prinzipiell sind derartige Verfahren sehr effizient, jedoch bestehen infolge der in der Regel ungleichen Paketgrößen der Redundanzinkremente, d.h. der Wiederholungen untereinander und im Vergleich zum Datenpaket, gewisse Nachteile bei der praktischen Implementierung. Weiterhin sind die Inkremente im allgemeinen nicht ohne das ursprüngliche Paket auswertbar, d.h. die Inkremente müssen gemeinsam verarbeitet werden.

Der Erfindung liegt die Aufgabe zugrunde, ein effizientes Verfahren der eingangs genannten Art sowie eine entsprechende Empfangseinrichtung der eingangs genannten Art aufzuzeigen. Insbesondere soll eine gesicherte Datenübertragung in einem digitalen Kommunikationssystem ermöglicht werden.

Diese Aufgabe wird hinsichtlich des Verfahrens durch ein Verfahren mit den Merkmalen des Anspruchs 1 gelöst.

Ausgestaltungen und Weiterbildungen sind Gegenstand der Unteransprüche.

Erfindungsgemäß wird im Empfänger mindestens eine Kombination von mindestens zwei aus den zu verschiedenen Zeitpunkten gesendeten Datenpaketen gebildet und ausgewertet.

Die kombinierten Datenpakete haben hierbei den gleichen Inhalt, d.h. die ihnen vor der Bearbeitung im Sender zugrunde liegende Information ist identisch. Vorteilhafterweise findet die Kombinationsbildung zeitlich an den Empfang eines der weiteren Datenpakete anschließend, bevor ein weiteres Datenpaket empfangen wird, statt. Dies bedeutet, dass dann im zeitlichen Ablauf bei der Übermittlung mehrerer Wiederholungspakete vom Sender zum Empfänger mehrere Kombinationen gebildet werden.

Die Kombinationsbildung kann auf Symbolebene z.B. gemäß dem Maximum Ratio Combining erfolgen. Hierbei werden korrespondierende Empfangssymbole der einzelnen Pakete vor der Demodulation gewichtet aufaddiert. Die Wichtungsfaktoren werden so gewählt, dass das Signal- zu Rauschleistungsverhältnis am Demodulatoreingang maximiert wird. Dies wird erzielt, wenn die Wichtungsfaktoren proportional zu den Kanalübertragungsfaktoren der einzelnen Symbole gewählt werden.
Alternativ ist auch ein Selection Combining, d.h. die Auswahl des mit der höchsten Zuverlässigkeit zu demodulierenden Symbols denkbar.
Das Prinzip des Selection Combining ist auch auf Bitebene anwendbar, indem aufgrund von Soft-Informationen (i.a. Log-Likelihood-Ratios) am Demodulator- oder Decoderausgang aus korrespondierenden Bits der Pakete jeweils das zuverlässigste ausgewählt wird. Alternativ kann die Kombination in diesem Fall auch durch Addition der Softwerte erfolgen.

Vorteile des Verfahrens liegen darin, dass
- empfängerseitig die z.B. mittels ARQ angeforderten Wiederholungspakete gemeinsam mit den aus vorangegangenen Übertragungen vorliegenden Paketen ausgewertet werden können,
- durch die Kombination von Paketen eine zuverlässigere Detektion ermöglicht wird,
- gegenüber herkömmlichen Verfahren nur geringe Modifikationen der Senderstruktur erforderlich sind,
- speziell bei vergleichsweise hohen Paketfehlerraten die Wahrscheinlichkeit von Mehrfachwiederholungen und somit die mittlere Paketverzögerung, sowie die Varianz der Verzögerung deutlich reduziert werden kann,
- der Datendurchsatz erhöht werden kann,
- eine einzelne Auswertung von Wiederholungen ohne Einbeziehung früher gesendeter Versionen in Ergänzung zum erfindungsgemäßen Verfahren entsprechend den klassischen ARQ Mechanismen möglich ist.

Die Übermittlung der weiteren Datenpakete vom Sender zum Empfänger findet im Hinblick auf ARQ Verfahren nur dann statt, wenn sich bei der Auswertung des ersten Paketes beim Empfänger herausstellt, dass dieses fehlerhaft übertragen wurde. Das erfindungsgemäße Verfahren stellt daher im Rahmen eines verbesserten ARQ Verfahrens diejenigen Schritte dar, welche bei fehlerhafter Datenübermittlung durchgeführt werden.

In Ausgestaltungen der Erfindung besteht die mindestens eine im Empfänger gebildete Kombination aus allen gesendeten Datenpaketen, aus dem ersten Datenpaket und mindestens einem der weiteren Datenpakete, aus mindestens zwei der weiteren Datenpakete oder aus zeitlich benachbart gesendeten Datenpaketen. Auch Kombinationen dieser vier genannten Möglichkeiten können angewandt werden. Es ist jegliche Kombination aus dem ersten und den weiteren Datenpaketen möglich, welche mindestens zwei Datenpakete kombiniert. Das erste Datenpaket kann also mit einer beliebigen Anzahl an weiteren Datenpaketen kombiniert werden, und ebenso kann jedes weitere Datenpaket mit dem ersten und/oder mit einer beliebigen Anzahl an anderen weiteren Datenpaketen kombiniert werden. Die Auswahl der zu bildenden Kombination kann dann z.B. im Empfänger abhängig von der aktuellen Situation erfolgen.

In einer Weiterbildung der Erfindung sind die Bestandteile der mindestens einen Kombination abhängig von der Anzahl der weiteren Datenpakete und/oder einer Bedingung. Die Art der gebildeten Kombination kann mit der Zeit variieren. So ist es beispielsweise denkbar, dass nach dem Empfang des n-ten Wiederholungspaketes eine andere Art der Kombinationsbildung durchgeführt wird als nach dem (n+1)-ten oder einem beliebigen anderen. Eine Bedingung könnte z.B. die aktuellen Übertragungsbedingungen oder die erforderliche Fehlerfreiheit beinhalten.

Mit Vorteil kann mindestens eines der weiteren Datenpakete und mindestens ein anderes der weiteren Datenpakete identisch sein. Zusätzlich oder alternativ kann dieses mindestens eine der weiteren Datenpakete und das erste Datenpaket identisch sein. Es können also sowohl alle gesendeten Datenpakete identisch sein, als auch eine Teilmenge dieser Datenpakete. Die Identität bezieht sich hierbei auf den Zustand vor dem Senden der Datenpakete. D.h. identischen Datenpaketen liegt der gleiche Informationsgehalt zugrunde und sie werden im Sender auf gleiche Weise bearbeitet.

In Weiterbildung der Erfindung unterscheidet sich mindestens eines der weiteren Datenpakete und mindestens ein anderes der weiteren Datenpakete darin, dass sie einem Scrambling mit mindestens zwei unterschiedlichen Scrambling-Vorschriften unterworfen wurden und/oder dass sie einem Symbol Interleaving mit mindestens zwei unterschiedlichen Vorschriften unterworfen wurden und/oder dass sie einem Bit Interleaving mit mindestens zwei unterschiedlichen Vorschriften unterworfen wurden. Zusätzlich oder alternativ kann sich dieses mindestens eine der weiteren Datenpakete und das erste Datenpaket in einem oder mehreren der genannten Punkte unterscheiden. Die genannten Unterscheidungspunkte betreffen jeweils nicht den Inhalt der Datenpakete, sondern die senderseitige Verarbeitung derselben. Insgesamt kann sich also eine beliebige Teilmenge der gesendeten Datenpakete oder auch alle Datenpakete voneinander durch unterschiedliches Scrambling, Symbol Interleaving oder Bit Interleaving oder auch eine Kombination dieser drei genannten Möglichkeiten unterscheiden. Beispielhafterweise kann das erste Datenpaket mit einem Scrambling nach einer Vorschrift a, ein erstes weiteres Datenpaket mit einem Scrambling nach einer Vorschrift b und ein zweites weiteres Datenpaket mit einem Scrambling nach der Vorschrift a senderseitig bearbeitet werden.

In einer Ausgestaltung der Erfindung erfolgt die Kombination im Empfänger auf der Signalebene oder auf der Bitebene. Bei der Kombination auf Signalebene wird diese vor dem Demodulieren durchgeführt. Wird hingegen auf der Bitebene kombiniert, so erfolgt die Demodulation vor der Kombinationsbildung.

Mit Vorteil kann die mindestens eine Kombination in Abhängigkeit von einer Bedingung gebildet werden. Diese entscheidet also, ob eine Kombination überhaupt gebildet werden soll. Die Bedingung kann z.B. die Fehlerhaftigkeit des zuletzt empfangenen Datenpaketes beinhalten.

In einer bevorzugten Ausführungsform wird das Verfahren auf ein Funk-Kommunikationssystem angewandt.

Vorteilhafterweise wird das Verfahren auf ein OFDM System angewandt. Dieses OFDM System kann entweder leitungsgebunden oder auch über Funk Informationen übertragen.

Im Hinblick auf die Empfangseinrichtung für ein digitales Kommunikationssystem wird die oben genannte Aufgabe durch eine Empfangseinrichtung mit den Merkmalen des Anspruchs 13 gelöst.

Erfindungsgemäß weist die Empfangseinrichtung Mittel zum Bilden von mindestens einer Kombination von mindestens zwei Datenpakten aus einem ersten Datenpaket und einem oder mehreren weiteren zu mindestens einem späteren Zeitpunkt empfangenen Datenpaketen gleichen Inhalts und gleicher Länge wie das erste Datenpaket und zum Auswerten dieser mindestens einen Kombination auf. Bestandteil der mindestens einen Kombination kann also sowohl das erste Datenpaket und mindestens eines der weiteren Datenpakete, als auch ausschließlich weitere Datenpakete sein.

In einer Weiterbildung der Erfindung ist die Empfangseinrichtung derart ausgebildet, dass verschiedene Kombinationen von mindestens zwei Datenpaketen aus dem ersten Datenpaket und dem einen oder den mehreren weiteren zu mindestens einem späteren Zeitpunkt empfangenen Datenpaketen gleichen Inhalts und gleicher Länge wie das erste Datenpaket bildbar sind. Die Empfangseinrichtung muss also mindestens zwei verschiedene Kombinationen der empfangenen Datenpakete gleicher Länge und gleichen Inhalts bilden können.

Vorteilhafterweise ist die Empfangseinrichtung so ausgebildet, dass jede Kombination von mindestens zwei Datenpaketen aus dem ersten Datenpaket und dem einen oder den mehreren weiteren zu mindestens einem späteren Zeitpunkt empfangenen Datenpaketen gleichen Inhalts und gleicher Länge wie das erste Datenpaket bildbar ist. Jede Kombination impliziert hierbei, dass das erste Datenpaket mit jedem der weiteren Datenpakete in der Empfangseinrichtung kombiniert werden kann, und dass jedes der weiteren Datenpakete sowohl mit dem ersten als auch zusätzlich oder alternativ mit jedem anderen der weiteren Datenpakete kombiniert werden kann. Die Anzahl der Bestandteile der Kombination ist dabei beliebig, darf aber nicht kleiner als zwei Datenpakete sein. Die Empfangseinrichtung kann dann eine Auswahl aus diesen möglichen Kombinationen treffen, und diese ausgewählte Kombination oder Kombinationen bilden und auswerten. Die Auswahl kann in Abhängigkeit von der aktuellen Situation oder von festzulegenden Kriterien erfolgen.

In einer Ausgestaltung der Erfindung weist die Empfangseinrichtung ein Speicherelement zur Speicherung der empfangenen Datenpakete auf.

Mittel und Einrichtungen zur Durchführung der empfängerseitigen Verfahrensschritte gemäß der Erfindung nach Anspruch 1 und den Ausgestaltungen und Weiterbildungen der Erfindung können in der Empfangseinrichtung vorgesehen sein.

Einzelheiten und Details der Erfindung werden anhand eines Ausführungsbeispiels erläutert. Dabei zeigen
- Figur 1:: schematisch den Aufbau eines ersten Senders,
- Figur 2:: schematisch den Aufbau eines ersten erfindungsgemäßen Empfängers,
- Figur 3:: schematisch den Aufbau eines zweiten erfindungsgemäßen Empfängers,
- Figur 4:: schematisch den Aufbau eines zweiten Senders,
- Figur 5:: schematisch den Aufbau eines dritten erfindungsgemäßen Empfängers,
- Figur 6:: schematisch den Aufbau eines vierten erfindungsgemäßen Empfängers,
- Figur 7:: schematisch den Aufbau eines dritten Senders,
- Figur 8:: schematisch den Aufbau eines fünften erfindungsgemäßen Empfängers.

Sich entsprechende Bauteile sind in den Figuren mit identischen Bezugszeichen versehen.

Das Ausführungsbeispiel betrifft ein OFDM Funkkommunikationssystem. Das beschriebene Verfahren ist jedoch auch auf andere Mehrträgertechniken und auch auf Einträgerverfahren anwendbar. Im folgenden werden drei Möglichkeiten zur Durchführung des Verfahrens anhand eines oder mehrerer jeweilig geeigneter Sender- und Empfängeraufbauten vorgestellt.

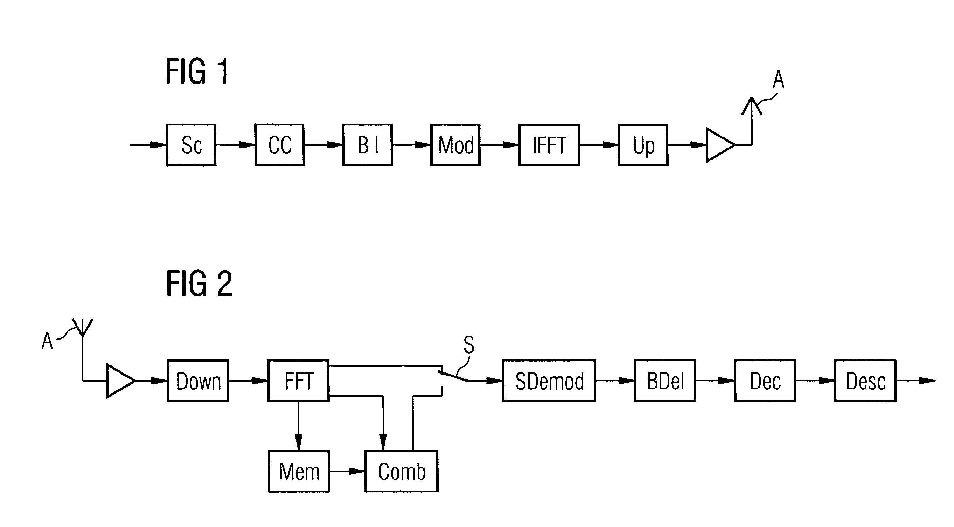

Figur 1 zeigt den schematischen Aufbau eines ersten Senders für die Durchführungsart Nummer eins. Auf einen Scrambler Sc folgt ein Kanalcodierer CC, ein Bit Interleaver BI, ein Modulator Mod, ein Element IFFT zur Durchführung einer Inversen Fast Fourier Transformation und ein Trägermodulator (Upconverter) Up. Das resultierende Signal wird von einer Antenne A abgestrahlt. Dieser erste Senderaufbau entspricht im wesentlichen demjenigen bei herkömmlichen ARQ Verfahren eingesetzten.

Figur 2 zeigt schematisch einen zugehörigen ersten Empfängeraufbau. Der Empfangsantenne A folgt ein Trägerdemodulator (Downconverter) Down und ein Element FFT zur Durchführung einer Fast Fourier Transformation. Das Resultat dieser Transformation wird je nach Stellung des Schalters S entweder direkt über einen Soft Demodulator SDemod zum Bit Deinterleaver BDeI, dem Viterbi Decodierer Dec und dem Descrambler Desc gesendet, oder es gelangt über ein Speicherelement Mem in ein Element Comb zur Kombination von Signalen. Die obere (erstgenannte) Schalterstellung wird für das erste Datenpaket, d.h. für das Originalpaket verwendet. Das Originalpaket gelangt bei der oberen Schalterstellung zusätzlich in das Speicherelement Mem, von wo aus es für spätere Kombinationen zur Verfügung steht. Die untere Schalterstellung kommt bei jeder wiederholten Übermittlung, d.h. bei jedem weiteren Datenpaket gleichen Inhalts, zum Einsatz. Hierbei gelangt jede Wiederholung in das Speicherelement Mem, von wo aus es für spätere Kombinationen zur Verfügung steht. Zusätzlich kann das aktuell empfangene Paket, welches aktuell auch für eine Kombination verwendet werden soll, direkt von dem Element FFT zur Durchführung einer Fast Fourier Transformation in das Element Comb zur Kombination von Signalen geleitet werden.

Im Kombinationselement Comb kann jede Kombination aus den empfangenen Datenpaketen, d.h. aus dem Originalpaket und den Wiederholungen, gebildet werden. Hierzu werden die empfangenen Signale im Speicherelement Mem zwischengespeichert und können dann z.B. mit aktuellen Wiederholungen kombiniert werden. Es ist auch möglich, dass das Kombinationselement Comb ein Paket, welches nicht kombiniert wurde, ausgibt, d.h. das Originalpaket oder eine einzelne Wiederholung.

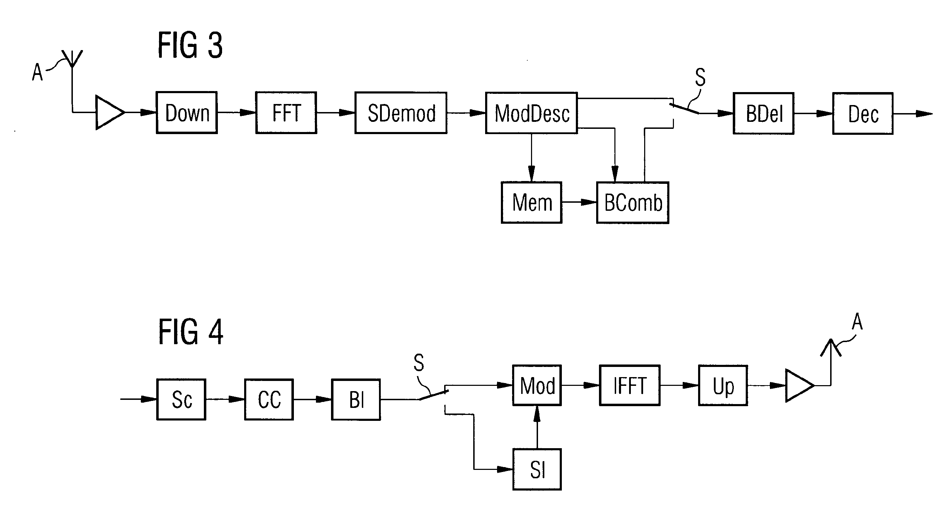

Die in Figur 2 dargestellte erste Empfängerstruktur führt eine Kombination auf Signalebene durch. Dies impliziert, dass die zu kombinierenden Signale den Demodulator SDemod noch nicht durchlaufen haben. Figur 3 hingegen zeigt einen zweiten Empfängeraufbau, bei welchem die Kombination auf Bitebene durchgeführt wird. Hierbei folgt auf die Empfangsantenne A ein Trägerdemodulator (Downconverter) Down, ein Element FFT zur Durchführung einer Fast Fourier Transformation, ein Soft Demodulator SDemod und ein modifizierter Descrambler ModDesc. Je nach Stellung des Schalters S gelangen die Bits dann gleich zum Bit Deinterleaver BDeI und dem Viterbi Decodierer Dec oder zuerst in ein Speicherelement Mem und in ein Element BComb zur Kombination von Bits. Die obere (erstgenannte) Schalterstellung wird für das erste Datenpaket, d.h. für das Originalpaket verwendet. Das Originalpaket gelangt bei der oberen Schalterstellung zusätzlich in das Speicherelement Mem, von wo aus es für spätere Kombinationen zur Verfügung steht. Die untere Schalterstellung kommt bei jeder wiederholten Übermittlung, d.h. bei jedem weiteren Datenpaket gleichen Inhalts, zum Einsatz. Hierbei gelangt jede Wiederholung in das Speicherelement Mem, von wo aus es für spätere Kombinationen zur Verfügung steht. Zusätzlich kann das aktuell empfangene Paket, welches aktuell auch für eine Kombination verwendet werden soll, direkt von dem modifizierten Descrambler ModDesc in das Element BComb zur Kombination von Bits geleitet werden. Für die im Kombinationselement BComb durchgeführten Kombinationen gilt die obenstehende Ausführung über das Kombinationselement Comb in Figur 2 für Signale entsprechend.

Im ersten Sender der Figur 1 werden das erste Datenpaket, d.h. das Originalpaket, und alle Wiederholungen im wesentlichen gleich behandelt. Zu beachten ist, dass in dem Falle, dass der in Figur 2 dargestellte erste Empfänger mit einer Kombination auf Signalebene eingesetzt wird, der Scrambler Sc für die Wiederholungen in gleicher Weise initialisiert werden muss wie bei der Erstsendung. Dies liegt darin begründet, dass bei einer Kombination auf Signalebene nur Signale sinnvollerweise kombiniert werden können, welche das gleiche Scrambling durchlaufen haben. Effektiv macht dies den Scrambler unwirksam, was im Falle von Clipping oder Intersymbol-Interferenzen durch lange Kanalimpulsantworten einen gravierenden Nachteil darstellt. Dieser Nachteil besteht jedoch nur, wenn empfängerseitig die Pakete auf Signalebene kombiniert werden.

Eine Alternative stellt daher die Kombination auf Bitebene dar. Dabei können wahlweise vor (wie in Figur 3) oder nach (nicht gezeigt) der Decodierung die Softwerte der empfangenen Bits der Einzelübertragungen aufsummiert werden. Der Scrambler kann hierbei senderseitig uneingeschränkt aktiv bleiben. Im zweiten Empfänger wird der Descrambler gewissermaßen durch den Decoder Dec und den Bit Deinterleaver BDeI hindurch gezogen, woraus eine modifizierte, eindeutige bestimmbare Descrambling-Vorschrift resultiert.

Im Falle des ersten Empfängers nach Figur 2 mit einer Kombination auf Signalebene unterscheiden sich das Originalpaket und die Wiederholungen also nicht, während im Falle des zweiten Empfängers nach Figur 3 mit einer Kombination auf Bitebene die Wiederholungen jeweils einem vom Originalpaket unterschiedlichen Scrambling unterworfen werden können.

Figur 4 zeigt den schematischen Aufbau eines zweiten Senders für die Durchführungsart Nummer zwei. Auf einen Scrambler Sc folgt ein Kanalcodierer CC und ein Bit Interleaver BI. Je nach Stellung des Schalters S gelangt die Bitfolge direkt in einen Modulator Mod, ein Element IFFT zur Durchführung einer Inversen Fast Fourier Transformation und einen Trägermodulator (Upconverter) Up, oder zuerst in einen Symbol Interleaver SI. Das resultierende Signal wird von einer Antenne A abgestrahlt. Die obere (erstgenannte) Schalterstellung wird für die das erste Datenpaket, d.h. für das Originalpaket verwendet. Entsprechend dem Symbol Interleaver SI kann bei der unteren Schalterstellung jede Wiederholung einem Symbolinterleaving mit jeweils veränderter Vorschrift unterzogen werden. Das Originalpaket dagegen erfährt kein Symbolinterleaving.

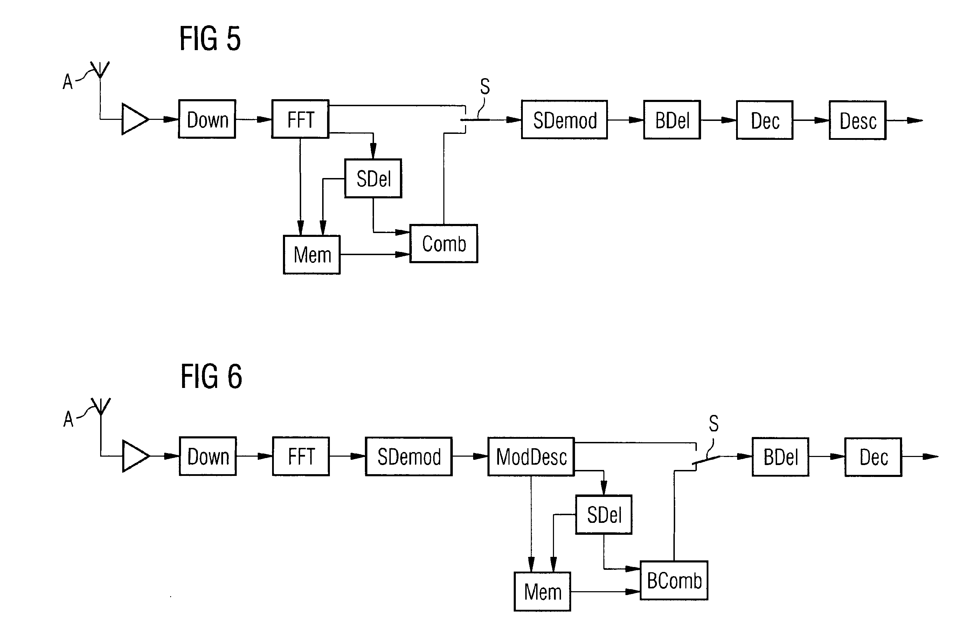

In Figur 5 ist schematisch der zugehörige Aufbau eines dritten Empfängers bei Kombination auf Signalebene dargestellt. Der Empfangsantenne A folgt ein Trägerdemodulator (Downconverter) Down und ein Element FFT zur Durchführung einer Fast Fourier Transformation. Das Resultat dieser Transformation wird je nach Stellung des Schalters S entweder direkt über einen Soft Demodulator SDemod zum Bit Deinterleaver BDeI, dem Viterbi Decodierer Dec und dem Descrambler Desc gesendet, oder es gelangt über ein Speicherelement Mem und einen Symbol Deinterleaver SDeI in ein Element Comb zur Kombination von Signalen. Die obere (erstgenannte) Schalterstellung wird für das erste Datenpaket, d.h. für das Originalpaket verwendet. Das Originalpaket gelangt bei der oberen Schalterstellung zusätzlich in das Speicherelement Mem, von wo aus es für spätere Kombinationen zur Verfügung steht. Die untere Schalterstellung kommt bei jeder wiederholten Übermittlung zum Einsatz. Hierbei gelangt jede Wiederholung über den Symbol Deinterleaver SDeI in das Speicherelement Mem, von wo aus es für spätere Kombinationen zur Verfügung steht. Zusätzlich kann das aktuell empfangene Paket, welches aktuell auch für eine Kombination verwendet werden soll, direkt von dem Symbol Deinterleaver SDeI in das Element Comb zur Kombination von Signalen geleitet werden.

In Figur 6 ist schematisch der zugehörige Aufbau eines vierten Empfängers bei Kombination auf Bitebene dargestellt. Hierbei folgt auf die Empfangsantenne A ein Trägerdemodulator (Downconverter) Down, ein Element FFT zur Durchführung einer Fast Fourier Transformation, ein Soft Demodulator SDemod und ein modifizierter Descrambler ModDesc. Je nach Stellung des Schalters S gelangen die Bits dann gleich zum Bit Deinterleaver BDeI und dem Viterbi Decodierer Dec oder zuerst über ein Speicherelement Mem und einen Symbol Deinterleaver SDeI in ein Element BComb zur Kombination von Bits. Die obere (erstgenannte) Schalterstellung wird für das erste Datenpaket, d.h. für das Originalpaket verwendet. Das Originalpaket gelangt bei der oberen Schalterstellung zusätzlich in das Speicherelement Mem, von wo aus es für spätere Kombinationen zur Verfügung steht. Die untere Schalterstellung kommt bei jeder wiederholten Übermittlung zum Einsatz. Hierbei gelangt jede Wiederholung über den Symbol Deinterleaver SDeI in das Speicherelement Mem, von wo aus es für spätere Kombinationen zur Verfügung steht. Zusätzlich kann das aktuell empfangene Paket, welches aktuell auch für eine Kombination verwendet werden soll, direkt von dem Symbol Deinterleaver SDeI in das Element BComb zur Kombination von Bits geleitet werden.

Auch bei der in den Figuren 5 und 6 dargestellte dritten und vierten Empfängerstruktur ist jede Kombination aus den empfangenen Datenpaketen, d.h. dem Originalpaket und den Wiederholungen, möglich.

Wird ein Symbolinterleaving eingesetzt, bei dem die Symbole auf verschiedene Subträger aufgeteilt werden, so kann gegenüber der Durchführungsart Nummer eins bei frequenzselektivem Übertragungskanal ein zusätzlicher Diversitätsgewinn erzielt werden, da die Kombination jeweils unterschiedliche Subträgerpositionen zusammenführt. Bei der Kombination auf Signalebene gelten für den Scrambler die gleichen Einschränkungen wie bei der Durchführungsart Nummer eins, jedoch werden die nachteiligen Auswirkungen durch den variablen Symbolinterleaver praktisch vollständig vermieden. Dies bedeutet, dass der Scrambler in diesem Fall konzeptionell nicht notwendig ist.

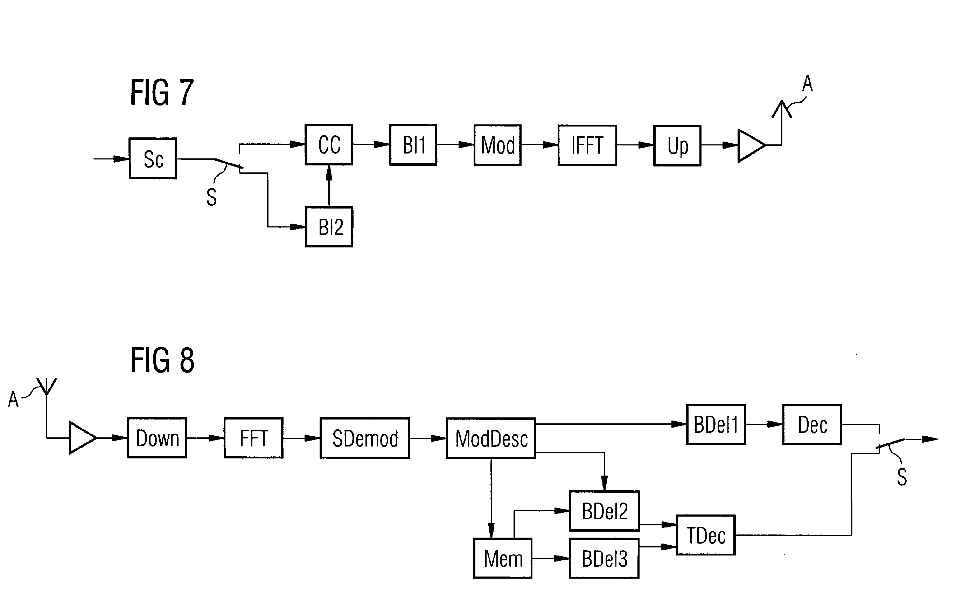

Figur 7 zeigt den schematischen Aufbau eines dritten Senders für die Durchführungsart Nummer drei. Hierbei schließt sich der Schalter S direkt an den Scrambler Sc an. In der oberen Schalterstellung folgt ein Kanalcodierer CC, ein Bit Interleaver BI1, ein Modulator Mod, ein Element IFFT zur Durchführung einer Inversen Fast Fourier Transformation und ein Trägermodulator (Upconverter) Up. In der unteren Schalterstellung durchläuft die Bitfolge zuerst einen Bit Interleaver BI2. Das resultierende Signal wird von einer Antenne A abgestrahlt. Originalpaket und Wiederholungen können senderseitig also jeweils einem unterschiedlichen Bitinterleaving unterzogen werden. Der Bit Interleaver BI2 ist dabei derart ausgestaltet, dass jede Wiederholung einem unterschiedlichen Bitinterleaving unterzogen werden kann. Gemeinsam betrachtet ergeben z.B. das Originalpaket und die Wiederholungen einen Turbo Code, der empfängerseitig durch einschlägige iterative Decodierverfahren ausgewertet werden kann.

In Figur 8 ist schematisch der zugehörige Aufbau eines fünften Empfängers bei Kombination auf Bitebene dargestellt. Hierbei folgt auf die Empfangsantenne A ein Trägerdemodulator (Downconverter) Down, ein Element FFT zur Durchführung einer Fast Fourier Transformation, ein Soft Demodulator SDemod und ein modifizierter Descrambler ModDesc. Je nach Stellung des Schalters S gelangen die Bits dann gleich zum Bit Deinterleaver BDeI1 und dem Viterbi Decodierer Dec oder über ein Speicherelement Mem und einen der beiden Bit Deinterleaver BDeI2 und BDeI3 in den Turbodecodierer TDec. Die Bit Deinterleaver BDeI1, BDeI2 und BDeI3 sind hierbei derart ausgestaltet, dass sie die jeweiligen Umkehrfunktionen der in Figur 7 dargestellten Bit Interleaver BI1 oder BI2 durchführen können. Die obere (erstgenannte) Schalterstellung wird für das erste Datenpaket, d.h. für das Originalpaket verwendet. Das Originalpaket gelangt bei der oberen Schalterstellung zusätzlich in das Speicherelement Mem, von wo aus es für spätere Kombinationen zur Verfügung steht. Die untere Schalterstellung kommt bei jeder wiederholten Übermittlung zum Einsatz. Hierbei gelangt jede Wiederholung in das Speicherelement Mem, von wo aus es für spätere Kombinationen zur Verfügung steht. Zusätzlich kann das aktuell empfangene Paket, welches aktuell auch für eine Kombination verwendet werden soll, direkt von dem modifizierten Descrambler ModDesc in den Bit Deinterleaver BDeI2 geleitet werden. Aus dem Speicherelement Mem können beliebige Kombinationen aus dem Originalpaket und den Wiederholungen in die Bit Deinterleaver BDeI2 und BDeI3 transportiert werden, von wo aus sie zum Turbodecodierer TDec gelangen. Während in Figur 8 vor dem Turbodecodierer TDec nur zwei Bit Deinterleaver BDeI2 und BDeI3 dargestellt sind, kann der zum dritten Sender der Figur 7 gehörige fünfte Empfänger an dieser Stelle auch eine Vielzahl von Bit Deinterleavern aufweisen.

Auch in der Durchführungsart Nummer drei ist der Scrambler konzeptionell nicht notwendig, kann jedoch auch uneingeschränkt erhalten bleiben.

## Patentansprüche

1. Verfahren zur Datenübertragung in einem digitalen Kommunikationssystem, wobei
ein erstes Datenpaket von einem Sender zu einem Empfänger übermittelt und im Empfänger ausgewertet wird und
eines oder mehrere weitere Datenpakete gleichen Inhalts und gleicher Länge wie das erste Datenpaket zu mindestens einem späteren Zeitpunkt von dem Sender zu dem Empfänger übermittelt wird,
**dadurch gekennzeichnet,**
**dass** im Empfänger mindestens eine Kombination von mindestens zwei aus den zu verschiedenen Zeitpunkten gesendeten Datenpaketen gebildet und ausgewertet wird.

2. Verfahren nach Anspruch 1, **dadurch gekennzeichnet, dass** die mindestens eine Kombination aus allen gesendeten Datenpaketen besteht.

3. Verfahren nach Anspruch 1 oder 2, **dadurch gekennzeichnet, dass** die mindestens eine Kombination aus dem ersten Datenpaket und mindestens einem der weiteren Datenpakete besteht.

4. Verfahren nach Anspruch 1, **dadurch gekennzeichnet, dass** die mindestens eine Kombination aus mindestens zwei der weiteren Datenpakete besteht.

5. Verfahren nach einem der Ansprüche 1 bis 4, **dadurch gekennzeichnet, dass** die mindestens eine Kombination aus zeitlich benachbart gesendeten Datenpaketen besteht.

6. Verfahren nach einem der Ansprüche 1 bis 5, **dadurch gekennzeichnet, dass** die Bestandteile der mindestens einen Kombination abhängig von der Anzahl der weiteren Datenpakete und/oder einer Bedingung sind.

7. Verfahren nach einem der Ansprüche 1 bis 6, **dadurch gekennzeichnet, dass** mindestens eines der weiteren Datenpakete und mindestens ein anderes der weiteren Datenpakete und/oder das erste Datenpaket identisch sind.

8. Verfahren nach einem der Ansprüche 1 bis 7, **dadurch gekennzeichnet, dass** sich mindestens eines der weiteren Datenpakete und mindestens ein anderes der weiteren Datenpakete und/oder das erste Datenpaket darin unterscheiden,
- dass sie einem Scrambling mit mindestens zwei unterschiedlichen Scrambling-Vorschriften unterworfen wurden und/oder
- dass sie einem Symbol Interleaving mit mindestens zwei unterschiedlichen Vorschriften unterworfen wurden und/oder
- dass sie einem Bit Interleaving mit mindestens zwei unterschiedlichen Vorschriften unterworfen wurden.

9. Verfahren einem der Ansprüche 1 bis 8, **dadurch gekennzeichnet, dass** die Kombination im Empfänger auf der Signalebene oder auf der Bitebene erfolgt.

10. Verfahren nach einem der Ansprüche 1 bis 9, **dadurch gekennzeichnet, dass** die mindestens eine Kombination abhängig von einer Bedingung gebildet wird.

11. Verfahren nach einem der Ansprüche 1 bis 10, **dadurch gekennzeichnet, dass** es auf ein Funk-Kommunikationssystem angewandet wird.

12. Verfahren nach einem der Ansprüche 1 bis 11, **dadurch gekennzeichnet, dass** es auf ein OFDM System angewandet wird.

13. Empfangseinrichtung für ein digitales Kommunikationssystem mit Mitteln zum Empfangen von Datenpaketen,
**dadurch gekennzeichnet,**
**dass** sie Mittel zum Bilden von mindestens einer Kombination von mindestens zwei Datenpaketen aus einem ersten Datenpaket und einem oder mehreren weiteren zu mindestens einem späteren Zeitpunkt empfangenen Datenpaketen gleichen Inhalts und gleicher Länge wie das erste Datenpaket und zum Auswerten dieser mindestens einen Kombination aufweist.

14. Empfangseinrichtung nach Anspruch 13, **dadurch gekennzeichnet, dass** sie derart ausgebildet ist, dass verschiedene Kombinationen von mindestens zwei Datenpaketen aus dem ersten Datenpaket und dem einen oder den mehreren weiteren zu mindestens einem späteren Zeitpunkt empfangenen Datenpaketen gleichen Inhalts und gleicher Länge wie das erste Datenpaket bildbar sind.

15. Empfangseinrichtung nach Anspruch 13 oder 14, **dadurch gekennzeichnet, dass** sie derart ausgebildet ist, dass jede Kombination von mindestens zwei Datenpaketen aus dem ersten Datenpaket und dem einen oder den mehreren weiteren zu mindestens einem späteren Zeitpunkt empfangenen Datenpaketen gleichen Inhalts und gleicher Länge wie das erste Datenpaket bildbar ist.

16. Empfangseinrichtung nach einem der Ansprüche 13 bis 15, **dadurch gekennzeichnet, dass** sie ein Speicherelement (Mem) zur Speicherung der empfangenen Datenpakete aufweist.
